# EUROPEAN PATENT APPLICATION

(11) **EP 2 607 763 A1**
(43) Date of publication of application: **26.06.2013**
(21) Application number: 11195577.9
(22) Date of filing: 23.12.2011
(51) Int. Cl.: F16L 11/15, F16L 41/08, F16L 57/02

(54) **Stiffener for corrugated pipe wall, assembly for connecting a branch to a plastic pipe, and method of handling a plastic pipe**

(71) Applicant: Wavin B.V., 8011 CW Zwolle (NL)
(72) Inventor: Roelfsema, Marcel, 9503 RH Stadskanaal (NL)
(74) Representative: HOFFMANN EITLE

(57) **Abstract**

A stiffener (8) for being inserted into a hollow corrugation (7) exposed about an opening (5) formed within a corrugated wall of a plastic pipe (1), wherein the hollow corrugation (7) is formed between an inner layer (3) and an outer layer (4) of the corrugated wall of the plastic pipe (1).

## Description

### Technical Field

The invention relates to the connection of a branch to a plastic pipe having a corrugated wall.

Such corrugated plastic pipes often comprise a smooth inner layer and a corrugated outer layer with hollow corrugations being formed between these layers, and they are, for example, used as sewer pipes. The branch may be both an outlet from and an inlet to the plastic pipe.

### Prior Art

EP 0 365 583 describes a connection assembly for connecting a cylindrical branch to a plastic pipe. In this connection assembly, a cylindrical insert pipe is inserted into an annular opening in the plastic pipe. At its end which is positioned in the plastic pipe, the insert pipe is provided with a flange or other type of widening. A blocking ring made of elastic material rests against the flange. The blocking ring has an outer diameter which, when fitted, i.e. after assembly, is larger than the diameter of the opening in the plastic pipe.

The known connection assembly is further provided with a lever which acts on the insert pipe. This lever can move the insert pipe outward in the radial direction of the plastic pipe. This brings the inside of the blocking ring against the plastic pipe, as a result of which the blocking ring locks the insert pipe in the outward radial direction with respect to the plastic pipe and also seals the connection. The lever locks the insert pipe in the inward radial direction of the plastic pipe.

An alternative connection assembly is known from WO 2008/069644 A2. This connection assembly also comprises an insert pipe having a flange, and further includes a deformable blocking ring which can assume a stretched and a folded form. In the folded form, the blocking ring prevents the insert pipe from being drawn out of the opening in the plastic pipe, and also produces a seal between the plastic pipe and the insert pipe.

### Disclosure of the Invention

The object of the invention is to improve the connection of a branch to a plastic pipe having a corrugated wall, so that the connection is leak tight even if the corrugated pipe is deflected or subjected to a certain lateral pressure load.

This object is, on the one hand, achieved by the stiffener of claim 1. The stiffener is suitable for being inserted into a hollow corrugation formed between an inner layer and an outer layer of the corrugated wall of the plastic pipe. The hollow corrugation is exposed about the opening formed within the corrugated wall of the plastic pipe, into which the branch is to be inserted.

The invention is based on the finding that when a corrugated pipe, in particular one having hollow corrugations, is deflected or subjected to a certain lateral pressure load, the smooth inner layer of the pipe, which may be rather thin, starts to deform, e.g. buckle or bend. In case the seal provided by, for example, the blocking ring of the connection assembly does not completely follow the buckled inner layer, leakage may occur around the opening in the pipe.

The stiffeners according to the invention can be inserted into at least some of the corrugations around the opening in order to support the inner wall of the corrugated pipe against buckling. In this manner, leakage occurring around the opening in the pipe is prevented or at least substantially reduced.

Preferred optional features are recited in the dependent claims.

Preferably, the stiffener is formed as a one-piece structure. The stiffener may be formed by moulding, e.g. by injection moulding, but also by milling, casting, vacuum forming or extruding. The manufacturing by moulding provides the possibility to have at least two of the stiffeners are connected to each other by means of their mould runners forming a so-called sprue (star-shaped or disc-shaped), so that they can be conveniently transported and distributed in pairs or groups. It is envisaged that four (or six) stiffeners are produced such that the stiffeners are hold together on the sprue. Such a set of stiffeners could then be used to close four (or six) hollow corrugations upon removing the sprue.

As regards the shape and construction of the stiffener of the invention, the shape of the stiffener is preferably adapted to the sectional shape of the hollow corrugation into which the stiffener is to be inserted, i.e. rectangular or circular shaped. However, other shapes are possible, in particular if materials such as foam, rubber or sponge-like materials are used which can easily be adapted to the sectional shape of the hollow corrugations.

In general terms, the stiffener may be made out of one piece or several interconnected pieces, and it may match the shape of the hollow configuration into which it is intended to be inserted more or less exactly. In some embodiments the stiffener only partly follows the shape of the hollow configuration.

The one piece stiffener could be made of any material, including solid materials or foam materials.

In another embodiment, the stiffener is made of a filling material that is introduced into a part of the hollow configuration. The filling material could for instance be a liquid material that later on hardens out. Also foam could be used as a material that is injected into a part of the hollow configuration.

According to still another embodiment, the stiffener is made from a composite material, which encompasses a cotton material (which is first brought into the hollow corrugation) and a filling material, e.g. PUR foam, which the lumina in the cotton are filled up with.

The stiffener preferably has a base part, e.g. a base plate, and a front part, e.g. a front plate, provided so as to extend at an angle from one end of the base part. The shape and arrangement of the front part are adapted to the sectional shape of the hollow corrugation exposed about the opening in the pipe. The sectional shape of the hollow corrugation is then properly maintained by means of the stiffener, and any buckling of the inner layer of the corrugated wall can be reduced by means of the stiffener, while the amount of material necessary is still relatively small if compared with e.g. a solid stiffener completely filling the aperture of the hollow corrugation exposed about the opening.

The stiffener further preferably has a center ridge extending upwards at a right angle from the base part. By this measure, the shape of the hollow corrugation is even more efficiently maintained by the stiffener.

In order to help retaining the stiffener within the hollow corrugation and ensure that the stiffener maintains its position within the hollow corrugation also under the influence of gravity and does no slide downward into (or along) the corrugation, the stiffener may additionally be provided with biasing means for retaining the stiffener within the hollow corrugation. These biasing means may, for example, be provided in the form of resilient fingers extending on both sides of the base part.

The above object is, on the other hand, achieved by an assembly for connecting a cylindrical branch to a plastic pipe according to claim 10. The assembly corresponds to the one known from the prior art WO 2008/069644 A2 insofar as it comprises an insert pipe for being inserted into the opening formed in the corrugated wall of the plastic pipe, which insert pipe is displaceable with respect to the corrugated wall about the opening, in a direction which is substantially perpendicular to the axial direction of the pipe, between a first position and a second position in which the position of the insert pipe with respect to the plastic pipe is locked. The assembly further includes a blocking ring having an outer diameter which is larger than the diameter of the opening, and a support which has a substantially fixed position with respect to the corrugated wall about the opening, against which support the blocking ring bears. In accordance with the present invention, at least one stiffener, which may be of the type recited above, is integrated with a component part of the assembly so as to extend into one of the hollow corrugations exposed about the opening when the insert pipe is in the second position.

Preferred optional features are recited in the dependent claim 11. In case the support is provided, in a manner which is also known as such, with at least one support lip arranged so as to rest against the outside of the blocking ring and hold the blocking ring against the insert pipe, the at least one stiffener may be integrated with the support lip. The stiffeners may, however, also be integrated with other parts of the connection assembly, as long as they are arranged and constructed so as to extend at least to some degree into the hollow corrugations when the assembly is assembled.

Finally, the above object is also achieved by a method for handling a plastic pipe in order to connect a branch thereto, in accordance with claim 12. The method of the present invention includes the step of inserting a stiffener, which may be of the type recited above, into at least one of the hollow corrugations exposed about the annular opening formed for inserting the branch. The stiffener is suitably inserted after the opening has been provided within the corrugated wall of the plastic pipe and before the branch is connected into the opening.

Preferred optional features are recited in the dependent claims.

In the method of the invention, not all of the hollow corrugations that are exposed about the opening have to be filled with stiffeners. In fact, it has been found to suffice that four of the hollow corrugations that border the opening are provided with stiffeners, grouped in diametrically opposed pairs. The stiffeners are suitably provided at those locations where the buckling of the inner layer of the corrugated wall would be most substantial. In some types of corrugated pipes, however, six or even more stiffeners could be required.

### Brief description of the drawings

In the attached drawings,
Fig. 1 is an overview of a plastic pipe comprising an opening for connecting a branch;
Figs. 2a and 2b are sectional views of a plastic pipe having a corrugated wall, and of a connection assembly comprising an insert pipe, in two different configurations;
Fig. 3 shows a hollow corrugation between an inner and an outer layer of the pipe wall in more detail;
Fig. 4 shows a first embodiment of a stiffener according to the present invention;
Fig. 5 shows another view of the first embodiment of a stiffener according to the present invention;
Fig. 6 shows the stiffeners of Figures 4 and 5 inserted into the apertures of hollow corrugations exposed by forming the opening within the pipe wall;
Figs. 7a to 7c show a second embodiment of a stiffener according to the present invention from three different perspectives;
Figs. 8a to 8c shows two of the stiffeners of Figures 7a to 7c inserted into apertures of hollow corrugations exposed by forming the opening within the pipe wall, from three different perspectives;
Fig. 9 shows a known assembly for connecting a branch to a plastic pipe; and
Fig. 10 shows a support which is a component part of the assembly of Figure 9.

### Detailed Description of Preferred embodiments

Preferred embodiments of the stiffener block and the connection assembly according to the present invention will now be described with reference to the attached Figures.

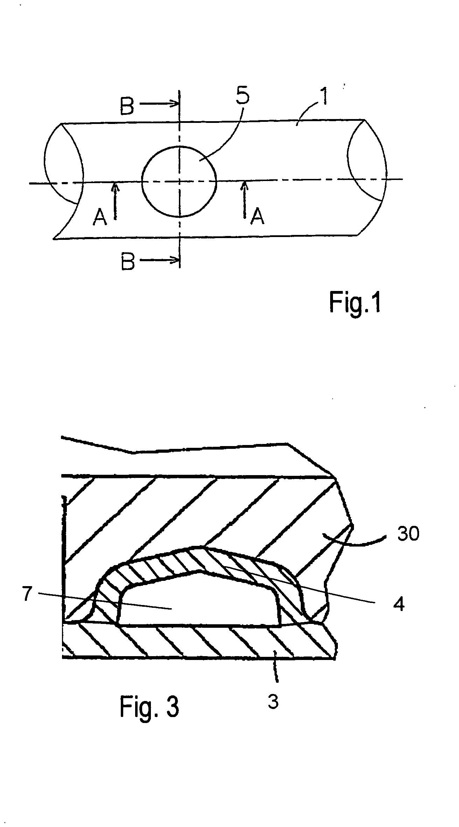

Figure 1 is a schematic view of a corrugated plastic pipe 1, e.g. a sewer pipe. The plastic pipe 1 is substantially cylindrical. An annular opening 5 is formed in the plastic pipe 1. The opening 5 is used for the connecting of a cylindrical or oval branch (not shown), which may be both an outlet from and an inlet to the plastic pipe 1.

Note that in Figure 1 the corrugated plastic pipe 1 is shown in a horizontal orientation. It is also possible that the corrugated plastic pipe 1 is arranged in a vertical orientation (e.g. if it is a shaft pipe). The cylindrical (or oval) branch would in this case be positioned horizontally.

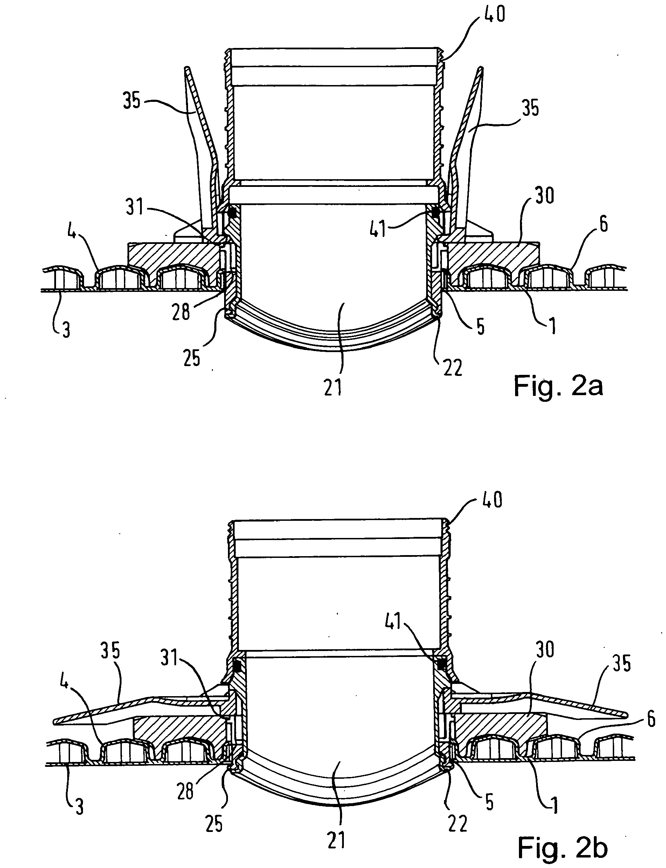

Figures 2a and 2b are sectional views of a plastic pipe 1 and a connection assembly used to connect a branch to the plastic pipe 1. The connection assembly is constituted as described in WO 2008/069644: It comprises an insert pipe 21 which has a flange 22 at its end which is inserted into the pipe 1. A blocking ring 25 is attached to the flange 22. In Fig. 2a, the insert pipe 21 is in the first position, and the blocking ring 25 is in the stretched state.

Above the blocking ring 25, a support ring 28 is provided. The support ring 28 is not attached to the insert pipe 21. To facilitate fitting of the support ring 28, the support ring 28 is split in its longitudinal direction.

A support plate 30 is attached to the outer surface 4 of the pipe 1. The support plate 30 is provided with an edge 31 which holds the support ring 28 in place with respect to the pipe 1.

The connection assembly further comprises a lever 35. This lever 35 acts on the insert pipe 21. Moving the lever 35 allows the insert pipe 21 to be moved from a first position (see Fig. 2a) to a second position (Figure 2b). The lever can be configured in such a way that the dead center position is passed when the insert pipe is moved from the first to the second position. This allows the lever 35 also to be used as a locking means because, once the dead centre position has been passed, the lever 35 prevents the insert pipe 21 from moving back toward the first position.

As a result of the fact that the pipe wall is cylindrical, the annular wall of the opening 5 is not positioned in one flat plane. The flange 22 of the insert pipe is adapted thereto as a result of the fact that the angle between the flange 22 and the insert pipe 21 is not constant over the circumference of the insert pipe 21.

Finally, Figures 2a and 2b also show the coupling of the insert pipe 21 to a sleeve 40. To prevent leakage, a ring seal 41 is provided between the sleeve 40 and insert pipe 21.

Figure 3 is an enlarged sectional view of a part of the wall of the plastic pipe 1 and a part of the support plate 30. In a manner known as such, the plastic pipe 1 is constituted by a smooth inner layer 3 and a corrugated outer layer 4. These layers 3, 4 may be either integrally formed, or formed separately and subsequently connected with each other. The corrugated outer layer 4 and the smooth inner layer 3 together form a set of cavities between each other, which are designated "hollow corrugations" in the present context. One of these hollow corrugations is shown in Figure 3 where it is designated 7.

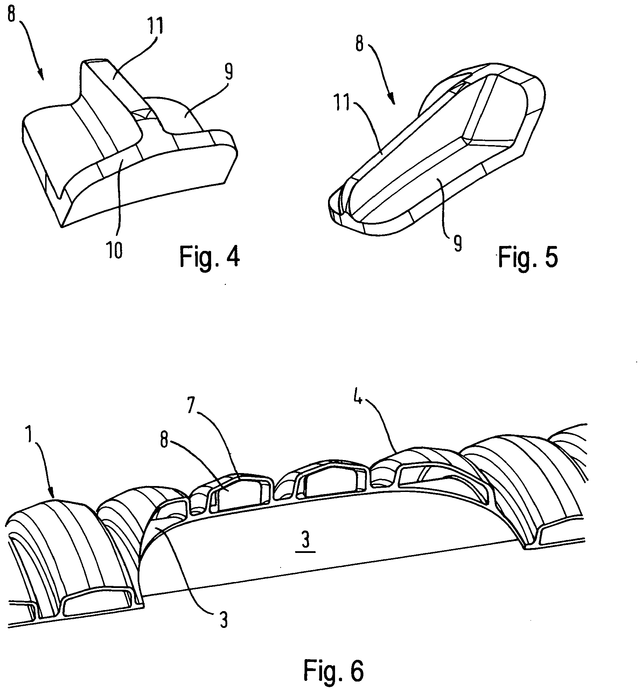

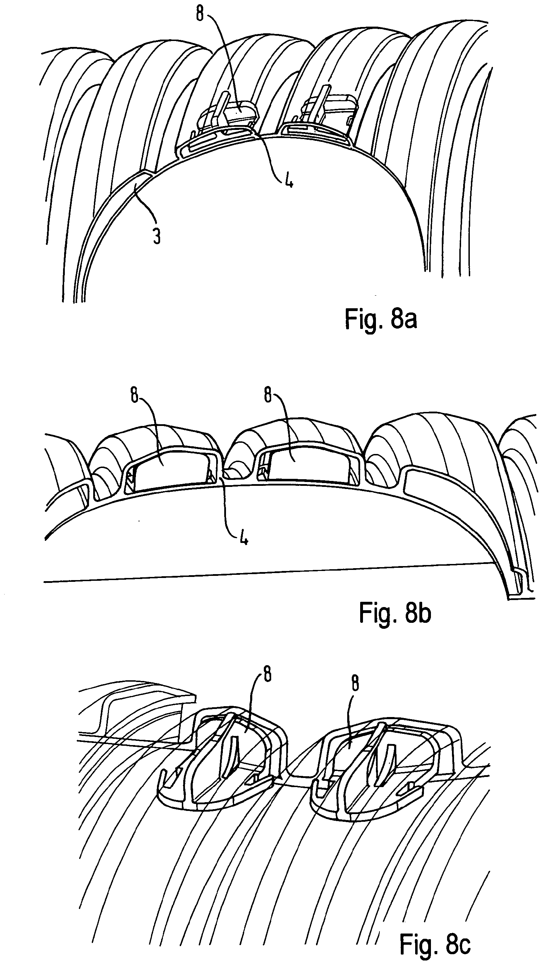

When the opening 5 for connecting the branch is provided within the corrugated wall of the plastic pipe 1, the hollow corrugations 7 are sectioned so that apertures to the hollow corrugations 7 are exposed about the opening 5 (this will be further described with reference to Figures 6 and 8) .

When the corrugated pipe 1 having these hollow corrugations 7 is deflected or subjected to a certain lateral pressure load, the smooth inner layer 3 of the pipe 1, which is rather thin, may start to buckle. In case the seal provided by the blocking ring 25 of the connection assembly does not completely follow the buckled inner layer 3, leakage may occur around the opening 5 formed in the corrugated wall of the plastic pipe 1.

For this reason, stiffeners 8 according to the present invention are provided in at least some of the corrugations 7 terminating at the opening 5, in order to support the inner layer 3 of the corrugated pipe 1 against buckling. (However, note that the connection assembly depicted in Figure 2 constitutes only one possibility for connecting a branch to a plastic pipe 1, and the stiffeners 8 of the present invention may also be used together with other connection assemblies. In fact, they can be used wherever a stiffening of the hollow corrugations of plastic pipes is required.)

A first embodiment of a stiffener 8 according to the present invention is shown in Figure 4. The stiffener 8 is formed as a one-piece structure, e.g. an injection moulded structure. The stiffener 8 has a base plate (or base part) 9. The base plate 9 is slightly curved so as to be adapted to the curved shape of the corrugation into which the stiffener 8 is to be inserted. A front plate (front part) 10 is provided so as to extend at an angle from one end of the base plate 9. The shape and arrangement of the front plate 10 corresponds to the shape of the hollow corrugation 7 where it has been sectioned so as to form the opening 5 in the pipe 1.

A center ridge 11 extends upwards at a right angle from the base plate 9. The center ridge 11 extends along substantially the entire length of the base plate 9 and connects to the front plate 10 so that the front plate 10 and the center ridge 11 substantially form a "T" shape. The center ridge 11 is slightly tapered towards the rear end of the base plate 9 opposite the front plate 10 so as to facilitate insertion of the stiffener 8 into the corrugation 7. A11 corners of the stiffener 8 are rounded, which also allows for an easier insertion and prevents any damaging of the corrugations 7.

Figure 5 shows a modification of the first embodiment of the stiffener 8, the shape of which is more slender in order to be adapted to smaller corrugations 7. Otherwise the stiffener 8 of Figure 5 is similar to the one of Figure 4.

Figure 6 shows the stiffeners 8 of Figures 4 and 5 inserted into the apertures of hollow corrugations 7 exposed about an opening 5 formed in the corrugated wall of the plastic pipe 1.

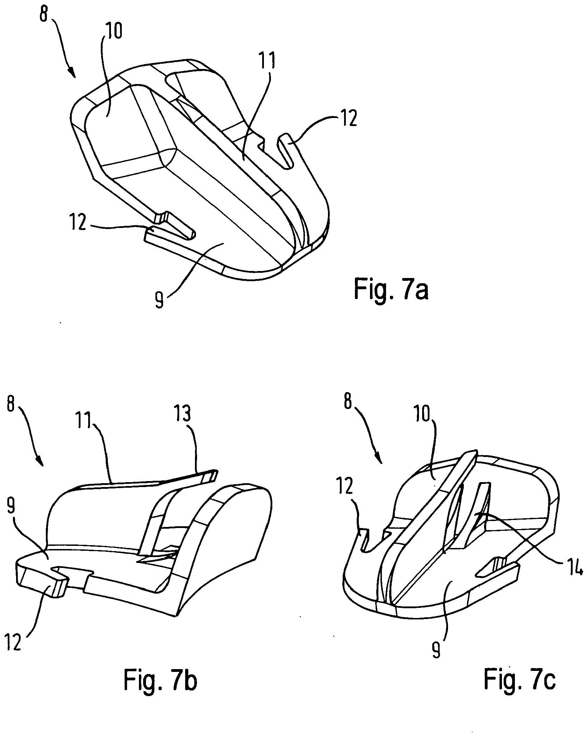

Figure 7 shows a second embodiment of a stiffener 8 according to the present invention. Similar as the stiffeners 8 of Figures 4 and 5, the one of Figure 7 has a base plate 9, front plate 10, and center ridge 11. The stiffener 8 of Figure 7 is additionally provided with biasing means in the form of resilient fingers 12 extending on both sides of the base plate 9. These fingers 12 help retaining the stiffener 8 within the corrugation 7 and ensure that the stiffeners maintain their position also under influence of gravity and do no slide downward into (or along) the corrugations.

Figure 8 shows two of the stiffeners 8 of Figure 7 within hollow corrugations 7 of a plastic pipe 1. From the Figure, it becomes clear how the resilient fingers 12 retain the stiffeners 8 within the hollow corrugations 7 so that the stiffeners 8 maintain their position. As also appears from Figure 8, not all the hollow corrugations 7 that border the opening 5 are provided with stiffeners 8. In fact, four stiffeners 8 have proven to be sufficient in order to achieve the desired result, grouped in diametrically opposed pairs. The buckling problems are most severe at those four locations or corrugations.

In case the stiffeners 8 of the present invention are used together with a prior art connection assembly for connecting a branch to a plastic pipe such as the one known from WO 98/069644 A2, the branch would be connected to the plastic pipe by means of the following method steps. Reference is again made to Figure 2 which shows the prior art connection assembly.

First of all, the annular opening 5 for connecting the cylindrical branch is formed within the corrugated wall of the plastic pipe 1, as schematically shown in Figure 1. Stiffeners 8 of the type recited above are employed in order to prevent the inner layer 3 of the corrugated wall from buckling. The stiffeners 8 are formed by moulding so that at least two of them are connected to each other by means of their mould runners. The stiffeners are then separated from each other and inserted into the apertures of at least some of the hollow corrugations 7 bordering the annular opening 5, in the manner shown in Figure 6 or 8. The stiffeners 8 are suitably formed and inserted so that the front plates 10 thereof are flush with the circumference of the annular opening 5, so that they do not interfere with the subsequent insertion of the insert pipe 21.

The insert pipe 21 is then inserted into the opening 5, which insert pipe has a flange 22 having a maximum diameter which is smaller than the diameter of the opening in the wall of the pipe and is larger than the outer diameter of the insert pipe. The deformable blocking ring 25 is arranged on the flange of the insert pipe 22, which deformable blocking ring can assume a stretched and a folded form, the blocking ring being substantially in the stretched form during the arranging thereof to the flange of the insert pipe. The support ring 28 is arranged to the blocking ring in such a way that the support ring is located between the insert pipe and the annular wall of the opening in the wall of the plastic pipe. The support ring 28 is then locked with respect to the annular wall of the opening 5 in the wall of the plastic pipe, the support ring remaining detached from the insert pipe. The insert pipe 21 is displaced in such a way that the flange of the insert pipe is brought closer to the support ring, the blocking ring being brought into its folded form, in which folded form the outer diameter of the blocking ring is larger than in the stretched form, and the blocking ring having, in the folded form, an outer diameter which is larger than the diameter of the opening in the plastic pipe. The position of the insert pipe with respect to the plastic pipe is locked in such a way that the folded form of the blocking ring is maintained, the force required for the locking being absorbed by the outer surface of the plastic pipe.

A third embodiment of the present invention will now be discussed. In the third embodiment, at least one stiffener for being inserted into a hollow corrugation is integrated with a component part of an assembly for connecting a branch to a plastic pipe.

As it has already been described with reference to Figure 2, the known assembly for connecting a cylindrical branch to a plastic pipe 1 comprises an insert pipe 21 for being inserted into the opening 5, which insert pipe 21 is displaceable with respect to the corrugated wall about the opening 5, in a direction which is substantially perpendicular to the axial direction of the pipe 1, between a first position and a second position in which the position of the insert pipe 21 with respect to the plastic pipe 1 is locked. A blocking ring 25 is provided, which has an outer diameter which is larger than the diameter of the opening 5. A support ring 28 has a substantially fixed position with respect to the corrugated wall about the opening 5, against which support ring 28 the blocking ring 25 bears.

In accordance with the third embodiment of the present invention, at least one stiffener is integrated with a component part of the assembly so as to extend at least to some extend into one of the hollow corrugations 7 exposed about the opening 5 when the insert pipe 21 is in the second position. In the assembled state of the assembly, the stiffener prevents the inner layer 3 of the corrugated wall of the plastic pipe 1 from buckling, similar as the stiffeners 8 described above. Integrating the stiffener with a component part of the connection assembly provides the beneficial effect that the number of parts of the overall structure used for connecting the branch is reduced. There are no small individual parts which could get lost during the connection process. In the assembled state, the integrated stiffeners also easily maintain their positions within the hollow corrugations because they are not separate parts, but integral parts of the connection assembly.

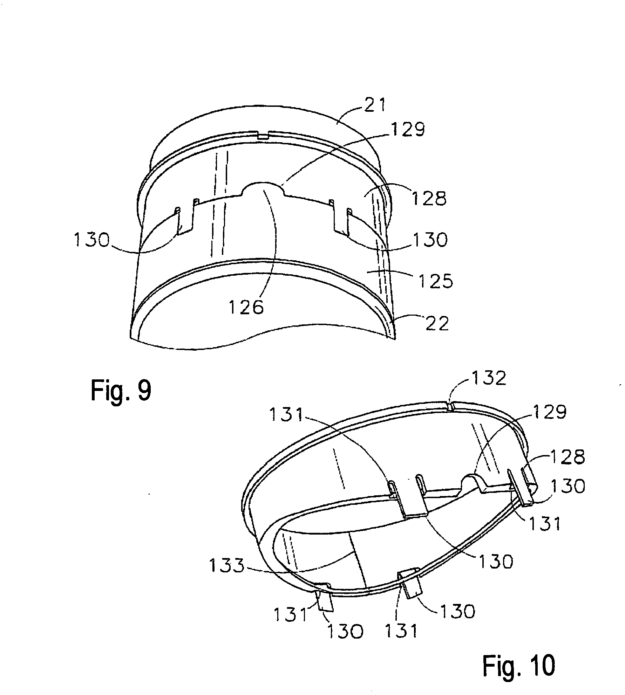

Fig. 9 shows a support ring 128 and a blocking ring 125 of a modified prior art connection assembly. In this variation, the blocking ring 125 is provided with projections 126. These projections 126 fall in the assembled state into recesses 129 in the support ring 128, as a result of which the blocking ring 125 and the support ring 128 are locked in the circumferential direction with respect to each other.

Fig. 10 is a perspective view of the support ring according to Fig. 9. Fig. 10 clearly shows the support edge 131 which follows the support lips 130. The support ring, as shown in Fig. 10, further contains a cam 132 which can be used for the locking in the circumferential direction of the support ring 128 with respect to, for example, the insert pipe 21.

In the variation of Figs. 9 and 10, the support ring 128 also has support lips 130. Provided in this case are four support lips 130 distributed over the circumference of the support ring 128. However, it is also possible for other numbers of support lips to be provided. The support lips 130 rest, when the connection assembly is assembled, against the outside of the blocking ring 125 and hold the blocking ring 125 against the insert pipe 21. The support lips 130 do not extend over the entire height of the blocking ring 125, so they do not impede the bending-out of the blocking ring 125 into the folded state.

Provided after the support lips 130 is preferably a support edge 131 against which the blocking ring 125 is drawn in the second position of the insert pipe 21. An advantage of this is that the blocking ring 125 is supported over its entire circumference. The support edge 131 is at a certain distance after the support lips 130, so the support lips 130 are able to bend resiliently.

The support lips 130 and the recess 129 do not have to be combined. A support ring 128 having either one or more support lips 130 or having just a recess 129 is also entirely possible.

To facilitate assembly, in the example of Fig. 10 the support ring 128 is split by a splitting seam 133.

As a result of the movement of the insert pipe 21 from the first position to the second position, a portion of the blocking ring 125 is doubled up. As a result, the outer diameter of the blocking ring 125 is locally enlarged, thus locking the insert pipe 21 in the plastic pipe.

In accordance with the third embodiment of the present invention, at least one stiffener could be integrated with any component part of the assembly shown in Figures 9 and 10, in particular with the support lip 130. The stiffener is arranged and constructed so that, in the assembled state of the connection assembly, it extends at least to some degree into one of the hollow corrugations 7 bordering the opening 5 in the plastic pipe 1, so as to support the inner layer 3 of the corrugated wall and prevent or at least reduce buckling of the inner layer 3.

## Claims

1. A stiffener (8) for being inserted into a hollow corrugation (7) exposed about an opening (5) formed within a corrugated wall of a plastic pipe (1), wherein the hollow corrugation (7) is formed between an inner layer (3) and an outer layer (4) of the corrugated wall of the plastic pipe (1).

2. The stiffener (8) of claim 1, which is formed as a one-piece structure, e.g. an injection moulded structure.

3. The stiffener (8) of any one of claims 1 and 2, the shape of which is adapted to the sectional shape of the hollow corrugation (7) into which the stiffener (8) is to be inserted.

4. The stiffener (8) of any one of claims 1 to 3, having a base part (9).

5. The stiffener (8) of claim 4, further comprising a front part (10) provided so as to extend at an angle from one end of the base part (9).

6. The stiffener (8) of claim 5, wherein the shape and arrangement of the front part (10) are adapted to the sectional shape of the hollow corrugation (7) exposed about the opening (5) in the pipe (1).

7. The stiffener (8) of any one of claims 4 to 6, having a center ridge (11) extending upwards at a right angle from the base part (9).

8. The stiffener (8) of any one of claims 1 to 7, wherein the stiffener (8) is additionally provided with biasing means for retaining the stiffener (8) within the hollow corrugation (7).

9. The stiffener (8) of claim 8, wherein the biasing means are provided in the form of resilient fingers (12) extending on both sides of the base part (9).

10. Assembly for connecting a cylindrical branch to a plastic pipe (1), which plastic pipe (1) has a corrugated wall having an inner layer (3) and an outer layer (4), and there being provided in the corrugated wall of the plastic pipe (1) an opening (5) for connecting the branch to the plastic pipe (1), which connection assembly comprises:
- an insert pipe (21) for being inserted into the opening (5), which insert pipe (21) is displaceable with respect to the corrugated wall about the opening (5), in a direction which is substantially perpendicular to the axial direction of the pipe (1), between a first position and a second position in which the position of the insert pipe (21) with respect to the plastic pipe (1) is locked,
- a blocking ring (25, 125) having an outer diameter which is larger than the diameter of the opening (5)in the second position, and
- a support ring (28, 128) which has a substantially fixed position with respect to the corrugated wall about the opening (5), against which support (28, 128) the blocking ring (25, 125) bears,
**characterized in that**
at least one stiffener (8) is integrated with a component part of the assembly and arranged and constructed so as to extend into one of the hollow corrugations (7) exposed about the opening (5) when the insert pipe (21) is in the second position.

11. The assembly of claim 10, wherein the support (128) is provided with at least one support lip (130) arranged so as to rest against the outside of the blocking ring (125) and hold the blocking ring (125) against the insert pipe (21), wherein the at least one stiffener (8) is integrated with the support lip (130).

12. Method of handling a plastic pipe (1) in order to connect a branch thereto, which plastic pipe (1) has a corrugated wall having an inner layer (3) and an outer layer (4),
which method includes the step of forming an opening (5) in the corrugated wall of the plastic pipe (1), whereby the corrugated wall is sectioned so that hollow corrugations (7), which are formed between the inner layer (3) and the outer layer (4) of the corrugated wall, are exposed about the opening (5),
**characterized in that**
a stiffener (8) is inserted into at least one of the hollow corrugations (7) exposed about the annular opening (5).

13. The method of claim 12, in which four of the hollow corrugations (7) that border the opening (5) are provided with stiffeners (8), grouped in diametrically opposed pairs.

14. The method of claim 12 or 13, in which the stiffeners (8) are formed by moulding so that at least two of them are connected to each other by means of their mould runners, and the stiffeners (8) are separated prior to insertion into the hollow corrugations (7).

15. The method of claim 12 or 13, using an assembly according to claim 10 or 11 for locking the position of an insert pipe (21) with respect to the plastic pipe (1), wherein the at least one stiffener (8) is integrated with a component part of the assembly.
